# EUROPÄISCHE PATENTANMELDUNG

(11) **EP 2 078 942 A2**
(43) Veröffentlichungstag der Anmeldung: **15.07.2009**
(21) Anmeldenummer: 09000219.7
(22) Anmeldetag: 09.01.2009
(51) Int. Cl.: G01M 3/40

(54) **Leckdetekions-Vorrichtung**

(30) Priorität: 10.01.2008 DE 102008003741; 10.01.2008 DE 202008000382 U
(71) Anmelder: tantec Oberflächenbehandlung GmbH, 71299 Wimsheim (DE)
(72) Erfinder: Morlock, Jürgen, 71299 Wimsheim (DE)
(74) Vertreter: Leitner, Waldemar

(57) **Zusammenfassung**

Die Erfindung betrifft eine Leckdetektions-Vorrichtung, die eine äußere Elektrode (2; 2', 2"), die gegenüber einer äußeren Oberfläche (O') eines Prüfobjekts (O) anordbar ist, und eine innere Elektrode (3), die in einen Innenraum (I) dieses Prüfobjekts (0) einbringbar und einer inneren Oberfläche (0") desselben gegenüberliegend angeordnet ist, aufweist.

Erfindungsgemäß ist vorgesehen, dass ein negativer Pol einer Gleichspannungsquelle (4) über eine erste Leitung (4a) mit der äußeren Elektrode (2; 2', 2") und ein positiver Pol der Gleichspannungsquelle (4) über eine zweite Leitung (4b) mit der inneren Elektrode (3) verbunden ist, so dass die äußere Elektrode (2; 2', 2") als Kathode und die innere Elektrode (3) als Anode ausgebildet ist, und dass zwischen der äußeren und der inneren Elektrode (3) eine Gleichspannung angelegt ist, deren Potentialdifferenz unter der Durchschlagspannung des Prüfobjekts (O) ist.

## Beschreibung

Die Erfindung betrifft eine Leckdetektions-Vorrichtung, die eine äußere Elektrode, die gegenüber einer äußeren Oberfläche eines Prüfobjekts anordbar ist, und eine innere Elektrode, die in einen Innenraum dieses Prüfobjekts einbringbar und einer inneren Oberfläche desselben gegenüberliegend angeordnet ist, aufweist

Eine derartige Leckdetektions-Vorrichtung ist bekannt und wird unter anderem dazu eingesetzt, die Leckfreiheit von - insbesondere medizinischen - Proberöhrchen zu überprüfen, Bei der bekannten Vorrichtung ist vorgesehen, dass die äußere Elektrode rohrförmig ausgestaltet ist, wobei dann in den Innenraum dieser rohrförmigen Elektrode das zu überprüfenden Röhrchen eingebracht wird. In dessen Innenraum wird dann die innere Elektrode eingeschoben und eine Wechselspannung wird an die beiden Elektroden angelegt. Treten keine Spannungsdurchschläge auf, so wird angenommen, dass das zu testende Röhrchen kein Leck aufweist.

Die Verwendung von Wechselstrom bei der Leckdetektion besitzt den Nachteil, dass hierdurch eine Veränderung der Oberfläche des zu prüfenden Objekts und/oder von dessen Oberflächeneigenschaften eintreten kann. Bei der Verwendung von Gleichspannung tritt in nachteiliger Art und Weise eine nur schwer entfembare elektrostatische Aufladung des zu prüfenden Objekts auf. Diese Vorgehensweise wird daher bis jetzt von den Fachkreisen abgelehnt.

Es ist Aufgabe der vorliegenden Erfindung, eine Leckdetektions-Vorrichtung der eingangs genannten Art derart weiterzubilden, dass in einfacher Art und Weise die Gefahr einer Beeinträchtigung der Oberfläche und/oder der Oberflächeneigenschaften des zu prüfenden Objekts eliminiert oder zumindest reduziert wird.

Diese Aufgabe wird dadurch gelöst, dass ein negativer Pol einer Gleichspannungsquelle über eine erste Leitung mit der äußeren Elektrode und ein positiver Pol der Gleichspannungsquelle über eine zweite Leitung mit der inneren Elektrode verbunden ist, so dass die äußere Elektrode als Kathode und die innere Elektrode als Anode ausgebildet ist, und dass zwischen der äußeren und der inneren Elektrode eine Gleichspannung angelegt ist, deren Potentialdifferenz unter der Durchschlagspannung des Prüfobjekts ist.

Durch die erfindungsgemäßen Maßnahmen wird in vorteilhafter Art und Weise eine Vorrichtung geschaffen, welche sich dadurch auszeichnet, dass durch die Verwendung einer Gleichspannung zur Beaufschlagung der bei der Leckdetektion zusammenwirkenden Elektroden die Gefahr einer negativen Beeinflussung der Oberfläche und/oder der Oberflächeneigenschaften des zu prüfenden Objekts eliminiert oder zumindest weitgehend reduziert ist. Indem nun erfindungsgemäß vorgesehen ist, dass die äußere Elektrode mit dem negativen Pol der Gleichspannungsquelle und die innere Elektrode mit deren positiven Pol verbunden ist, wird in vorteilhafter Art und Weise erreicht, dass die bei der unter Verwendung einer Gleichspannung durchgeführten Leckdetektion auftretende elektrostatische Ladung leicht entfernt werden kann: Die langlebigere, negative elektrostatische Aufladung ist an der Außenfläche des zu prüfenden Objekts konzentriert und kann daher von dieser leicht - z. B. durch einen Ionisationsstab - entfernt werden. Die an der Innfläche des zu prüfenden Objekts konzentrierte positive elektrostatische Ladung ist relativ kurzlebig und klingt rasch von selbst ab.

Eine vorteilhafte Weiterbildung der Erfindung sieht vor, dass die die äußere Elektrode beaufschlagende negative Spannung und die die innere Elektrode beaufschlagende positive Spannung im wesentlichen gleich groß sind, so dass die innere Elektrode und die äußere Elektrode gegenüber dem Erdpotential auf zwei Potentialen liegen, die vom Betrag her im wesentlichen gleich sind, aber ein verschiedenes Vorzeichen haben. Hierdurch wird in vorteilhafter Art und Weise erreicht, dass mit relativ geringen Spannungen, die typischerweise im Bereich von unter 5 kV liegen, gearbeitet werden kann.

Eine weitere vorteilhafte Weiterbildung der Erfindung sieht vor, dass die äußere Elektrode rohrförmig ausgebildet ist. Eine derartige Maßnahme besitzt den Vorteil, dass hierdurch das Prüfobjekt leicht in den Innenraum der derart ausgebildeten äußeren Elektrode eingebracht werden kann.

Eine weitere vorteilhafte Weiterbildung der Erfindung sieht vor, dass die äußere Elektrode ring- oder zylinderabschnittförmig ausgebildet ist. Eine derartige Maßnahme besitzt den Vorteil, dass hierdurch das zu Prüfobjekt durch die derart ausgebildete äußere Elektrode geschoben oder diese entlang des zu prüfenden Objekts verschoben werden kann. Hierdurch ist es in vorteilhafter Art und Weise nicht mehr erforderlich, dass die äußere Elektrode die gesamte Längserstreckung des zu prüfenden Objekts einnimmt.

Eine weitere vorteilhafte Weiterbildung der Erfindung sieht vor, dass die Vorrichtung außer der ring- oder zylinderabschnittförmig ausgebildeten äußeren Elektrode eine kappenartig ausgebildete weitere Elektrode aufweist, in die ein Ende des zu prüfenden Objekts einbringbar ist. Eine derartige Maßnahme besitzt den Vorteil, dass hierdurch auch bei röhrchenförmig ausgebildeten Prüfobjekten mit einem abgerundetem Endbereich - wie es bei typischerweise bei medizinischen Proberöhrchen der Fall ist - eine Leckdetektion auch in diesem Bereich einfach durchführbar ist.

Weitere vorteilhafte Weiterbildungen der Erfindung sind Gegenstand der Unteransprüche.

Weitere Einzelheiten und Vorteile der Erfindung sind den beiden Ausführungsbeispielen zu entnehmen, die im folgenden anhand der Figuren beschrieben werden.
Es zeigen:
- Figur 1:: ein erstes Ausführungsbeispiel einer Leckdetektions-Vorrichtung zusammen mit einem zu untersuchenden Proberöhrchen,
- Figur 2:: ein Schnitt entlang der Linie A-A der Figur 1,
- Figur 3:: eine Vorderansicht des ersten Ausführungsbeispiels,
- Figur 4:: ein zweites Ausführungsbeispiel einer Leckdetektions-Vorrichtung,
- Figur 5:: ein Schnitt entlang der Linie A-A der Figur 4, und
- Figur 6:: eine Vorderansicht des zweiten Ausführungsbeispiels

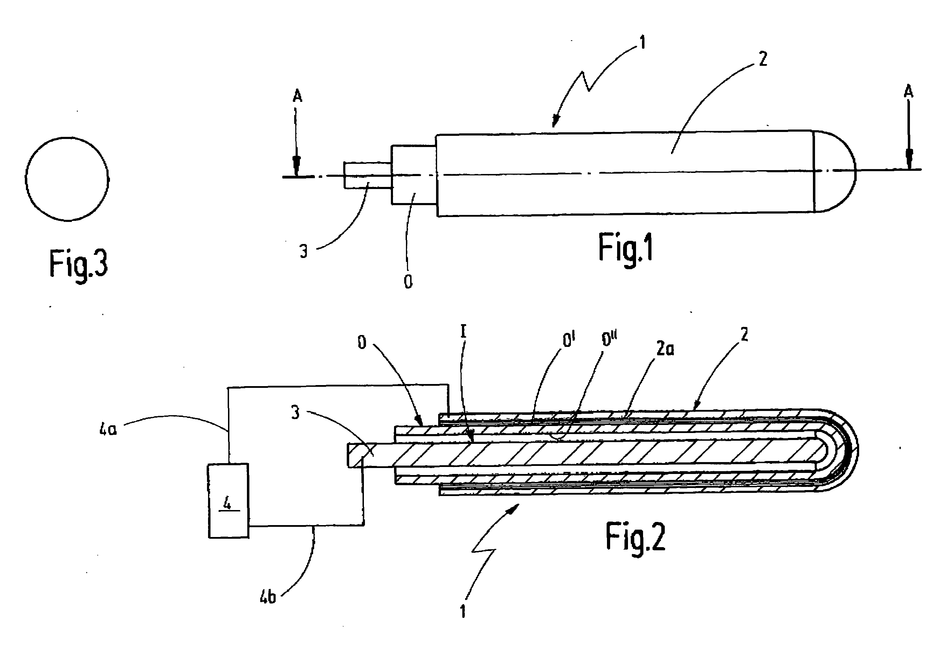

In den Figuren 1 - 3 ist nun ein erstes Ausführungsbeispiel einer allgemein mit 1 bezeichneten Leckdetektions-Vorrichtung dargestellt. Diese Vorrichtung weist eine äußere Elektrode 2 auf, die einer äußeren Oberfläche 0' des Prüfobjekts O gegenüberliegend angeordnet ist. Die Elektrode 2 besitzt einen Innenraum 2a, in den ein zu prüfendes Objekt O einbringbar ist. In den Innenraum I dieses Objekts O ist eine stabförmige innere Elektrode 3 der Vorrichtung 1 eingebracht, welche einer inneren Oberfläche O" des Prüfobjekts O gegenüberliegend angeordnet ist. Eine Gleichspannungsquelle 4 der Vorrichtung 1 ist über Leitungen 4a und 4b mit den Elektroden 2, 3 verbunden, und zwar derart, dass die äußere Elektrode 2 mit dem negativem Pol der Spannungsquelle 4 und die innere Elektrode 3 mit dem positiven Pol der Spannungsquelle 4 verbunden ist. Die äußere Elektrode 2 liegt somit auf einem niedrigeren Potential als das Erdpotential, wohingegen die innere Elektrode 3 auf einem höheren Potential als das Erdpotential liegt. Das zwischen den beiden Elektroden 2,3 anliegende Spannungspotential ist dabei derart gewählt, dass bei einem intakten Prüfobjekt O kein Spannungsdurchschlag stattfindet, so dass ein von einem entsprechenden Messgerät (nicht gezeigt) der Vorrichtung 1 detektierter Spannungsdurchschlag ein zuverlässiges Anzeichen dafür ist, dass das Prüfobjekt O ein Leck aufweist und somit den Prüfkriterien nicht entspricht.

Von Vorteil bei der beschriebenen Vorrichtung 1 ist nun, dass die beiden Elektroden 2,3 mit einer Gleichspannung beaufschlagt werden. Hierdurch wird die bei den bekannten Vorrichtungen, welche zur Beaufschlagung der beiden Elektroden 2,3 Wechselspannung verwenden, bestehende Gefahr der Beeinträchtigung der Oberflächen O'. O" des Prüfobjekts O und/oder von deren Oberflächeneigenschaften eliminiert oder zumindest reduziert. In dem nun vorgesehen ist, dass die äußere Elektrode 2 als die Kathode und die innere Elektrode 3 als die Anode der Leckdetektions-Vorrichtung 1 ausgebildet ist, wird in vorteilhafter Art und Weise erreicht, dass die bei dem Detektionsvorgang durch die verwendete Gleichspannung hervorgerufene elektrostatische Aufladung des Prüfobjekts O leicht wieder entfernt werden kann, da sich an der äußeren Oberfläche O' dann die negative elektrostatische Aufladung und an der inneren Oberfläche O" des Prüfobjekts O die positive elektrostatische Aufladung ansammelt. Die an der leicht zugänglichen äußeren Oberfläche O' befindliche negative elektrostatische Aufladung kann nach dem Entfernen des Prüfobjekts O aus der Vorrichtung 1 leicht - z. B, durch einen lonisationsstab - entfernt werden. Die an der inneren Oberfläche O", also der den schwer zugänglichen Innenraum I begrenzenden Oberfläche des Prüfobjekts O, befindliche positive statische Aufladung ist nur kurzlebig und verschwindet somit rasch von selbst, so dass in der Regel keine spezielle Behandlung der Oberfläche O" des Prüfobjekts O erforderlich ist.

Vorzugsweise ist hierbei vorgesehen, dass der an der äußeren Elektrode 2 und an der inneren Elektrode 3 anliegende Spannungswert im wesentlichen gleich groß sind. Die äußere Elektrode 2 und die innere Elektrode 3 liegen daher gegenüber dem Erdpotential auf Potentialen, die vom Betrag her im wesentlichen gleich sind, aber ein verschiedenes Vorzeichen haben. Hierdurch wird in vorteilhafter Art und Weise erreicht, dass die Leckdetektion mit einem relativem geringen Spannungspotential, typischerweise im Bereich zwischen 3 und 5 kV, durchgeführt werden kann.

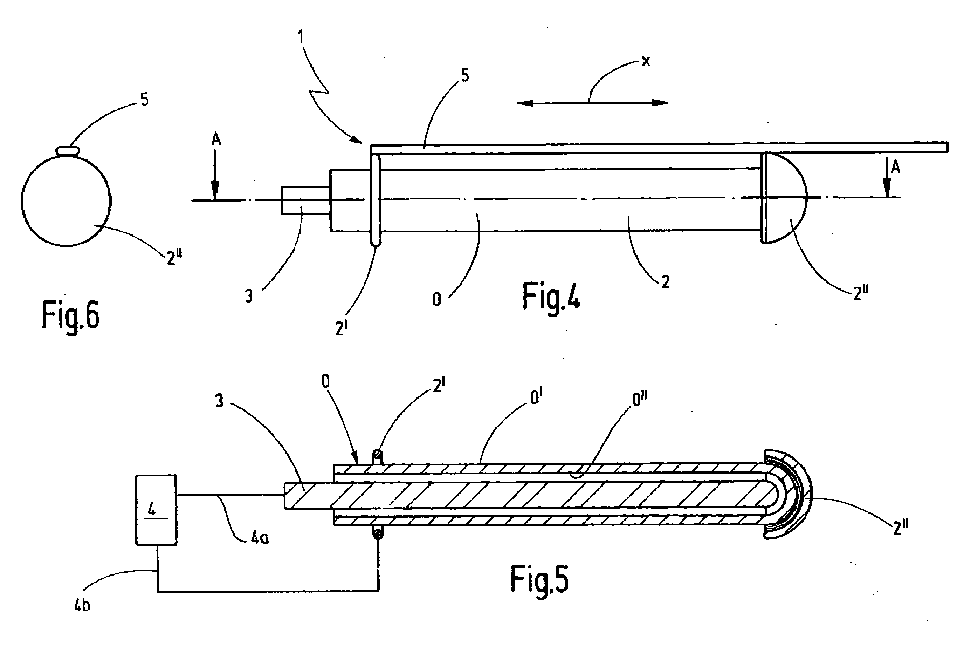

In den Figuren 4 bis 6 ist ein zweites Ausführungsbeispiel einer Vorrichtung 1 dargestellt, die ihrem Grundaufbau nach dem ersten Ausführungsbeispiel entspricht, so dass einander entsprechende Bauteile mit den gleichen Bezugszeichen versehen und nicht mehr näher beschrieben werden. Ein wesentlicher Unterschied zwischen dem ersten und zweiten Ausführungsbeispiel besteht nun darin, dass die äußere Elektrode 2' nun nicht mehr - wie beim ersten Ausführungsbeispiel - röhrchenförmig ausgebildet ist, sondern als Ring- oder Zylinderabschnitt, welcher durch eine nicht-gezeigte Einrichtung entlang der Längserstreckung des Prüfobjekts O in mindestens einer Richtung des Doppelpfeils X verschiebbar ist. Durch eine Verschiebung der ring- oder zylinderabschnittförmigen äußeren Elektrode 2' entlang der Längserstreckung des Prüfobjekts O wird dann sukzessive eine Leckdetektion durchgeführt.

Wie die Figur 4 zeigt, weist die Vorrichtung 1 eine weitere Elektrode 2" auf, welche kappenförmig ausgebildet ist, so dass - wie am besten aus Figur 5 ersichtlich ist - die weitere Elektrode 2" einen abgerundeten Endbereich des Prüfobjekts O umschließt. Hierdurch ist eine zuverlässige Leckdetektion auch bei einem gerundeten Endbereich möglich.

Im beschriebenen Ausführungsbeispiel wird die äußere Elektrode 2' durch einen elektrisch leitenden Stab 5 auf der weiteren Elektrode 2" geführt, so dass die beiden Elektroden 2', 2" auf dem gleichen Spannungspotential liegen. Diese Maßnahme ist zwar vorteilhaft, aber nicht zwingend erforderlich, da es natürlich auch möglich ist, dass die äußere Elektrode 2' durch eine entsprechende Einrichtung entlang der Längsrichtung des Prüfobjekts O bewegt und unabhängig von der weiteren Elektrode 2" mit einer Spannung beaufschlagt wird.

Natürlich ist nicht erforderlich, dass die äußere Elektrode 2' entlang des Prüfobjekts O verschoben wird. Es ist auch denkbar, dass die äußere Elektrode 2' ortsfest angeordnet und das Prüfobjekt O durch die ring- oder zylinderabschnittförmig ausgebildete äußere Elektrode 2' bewegt wird. Auch eine Kombination dieser beiden Vorgehensweisen ist möglich, Die Ausbildung der äußeren Elektrode 2' als ring- oder zylinderabschnittförmige Elektrode besitzt insbesondere bei längeren Prüfobjekten O Vorteile, da hierdurch die äußere Elektrode 2' nicht mehr die gesamte zu detektierende Längserstreckung des Prüfobjekts O einnehmen muss.

Zusammenfassend ist festzuhalten, dass durch die beschriebenen Maßnahmen eine Vorrichtung 1 ausgebildet wird, die sich dadurch auszeichnet, dass durch die Verwendung von Gleichstrom die Gefahr einer Beeinflussung der Oberflächen O', 0" des Prüfobjekts O und/oder von deren Oberflächeneigenschaften eliminiert oder zumindest reduziert wird. Die Ausbildung der inneren Elektrode 3 als Anode und der äußeren Elektrode 2 bzw. 2', 2" als Kathode besitzt den Vorteil, dass die bei dem gleichspannungsbeaufschlagten Leckdetektions-Vorgang entstehende elektrostatische Aufladung des Prüfobjekts O leicht entfernt werden kann.

## Patentansprüche

1. Leckdetektions-Vorrichtung, die eine äußere Elektrode (2; 2', 2"), die gegenüber einer äußeren Oberfläche (O') eines Prüfobjekts (O) anordbar ist, und eine innere Elektrode (3), die in einen Innenraum (I) dieses Prüfobjekts (O) einbringbar und einer inneren Oberfläche (O") desselben gegenüberliegend angeordnet ist, aufweist, **dadurch gekennzeichnet, dass** ein negativer Pol einer Gleichspannungsquelle (4) über eine erste Leitung (4a) mit der äußeren Elektrode (2; 2', 2") und ein positiver Pol der Gleichspannungsquelle (4) über eine zweite Leitung (4b) mit der inneren Elektrode (3) verbunden ist, so dass die äußere Elektrode (2; 2', 2") als Kathode und die innere Elektrode (3) als Anode ausgebildet ist, und dass zwischen der äußeren und der inneren Elektrode (3) eine Gleichspannung angelegt ist, deren Potentialdifferenz unter der Durchschlagspannung des Prüfobjekts (O) ist.

2. Leckdetektions-Vorrichtung nach Anspruch 1, **dadurch gekennzeichnet, dass** der an der äußeren Elektrode (2; 2', 2") anliegende negative Spannungswert und der an der inneren Elektrode (2 bzw. 2', 2"; 3) anliegende positive Spannungswert im wesentlichen gleich groß sind.

3. Leckdetektions-Vorrichtung nach Anspruch 1, **dadurch gekennzeichnet, dass** die äußere Elektrode (2) rohrförmig ausgebildet ist, so dass in ihrem Innenraum (2a) das Prüfobjekt (O) einbringbar ist.

4. Leckdetektions-Vorrichtung nach Anspruch 1, **dadurch gekennzeichnet, dass** die äußere Elektrode (2') ring- oder zylinderabschnittförmig ausgebildet ist, so dass das Prüfobjekt (O) in den Innenraum (2a) dieser Elektrode (2') einbringbar ist, und dass die äußere Elektrode (2') und das Prüfobjekt (O) zueinander relativ beweglich sind.

5. Leckdetektions-Vorrichtung nach Anspruch 3, **dadurch gekennzeichnet, dass** die Vorrichtung (1) eine weitere äußere Elektrode (2") aufweist, die kappenartig ausgebildet ist.

6. Leckdetektions-Vorrichtung nach Anspruch 1, **dadurch gekennzeichnet, dass** die äußere Elektrode (2') zumindest entlang eines Teils der Längserstreckung des Prüfobjekts (O) verschiebbar ist.

7. Leckdetektions-Vorrichtung nach einem der vorangehenden Ansprüche, **dadurch gekennzeichnet, dass** die innere Elektrode (3) stabförmig ausgebildet und in den Innenraum (I) des Prüfobjekts (O) einbringbar ist.

8. Leckdetektions-Vorrichtung nach einem der vorangehenden Ansprüche, **dadurch gekennzeichnet, dass** die Vorrichtung (1) eine Messeinrichtung zur Detektion eines Spannungsdurchschlags aufweist.
